# EUROPEAN PATENT APPLICATION

(11) **EP 4 553 623 A1**
(43) Date of publication of application: **14.05.2025**
(21) Application number: 23891647.2
(22) Date of filing: 16.11.2023
(51) Int. Cl.: G06F 3/0354, G06F 3/01, G06T 19/00

(54) **OPERATION DISPLAY SYSTEM**

(30) Priority: 16.11.2022 JP 2022183620
(71) Applicant: Mitsubishi Heavy Industries, Ltd., Tokyo 100-8332 (JP)
(72) Inventor: MAEDA, Shohei, Tokyo 100-8332 (JP); MOTOMURA, Satona, Tokyo 100-8332 (JP)
(74) Representative: Hoffmann Eitle
(86) International application number: PCT/JP2023/041235
(87) International publication number: WO 2024/106500

(57) **Abstract**

This operation display system for virtually displaying, on a virtual space, an operation unit to be operated comprises: an operation panel; a finger detection sensor that detects the position of a finger of an operator who operates the operation panel; a display unit that, on the basis of the detected position of the finger with respect to the operation panel, displays, in a superposed manner on the virtual space, the operation unit corresponding to the position of the operation panel and an image indicating the position of the finger; and a control unit that executes display control for displaying, on the display unit, the image indicating the positions of the operation unit and the finger. The operation panel has a base, and a bodily sensation imparting member that is disposed on the base and that imparts bodily sensation to the operator. The control unit determines whether there is an operation of the operation unit on the basis of the detection result of the finger detection sensor.

## Description

### Technical Field

The present disclosure relates to an operation display system.

### Background Art

In the related art, a system that displays a digital object on a device is known (for example, refer to PTL 1).

### Citation List

### Patent Literature

[PTL 1] Japanese Unexamined Patent Application Publication No. 2022-34560

### Summary of Invention

### Technical Problem

As a system as in PTL 1, for example, there is a system that displays an operation device as a digital object in a virtual space on a head mounted display (HMD). In such a system, when an operator operates the operation device in the virtual space, since there is no operation device in a real space, it is difficult for the operator to obtain an operational feeling of the operation device. In addition, a position of the operation device displayed in the virtual space and a position of a finger of the operator in the real space may deviate from each other, and thus, an operation may be performed in a manner different from an operator's intention.

Therefore, an object of the present disclosure is to provide an operation display system that imparts an operational feeling to an operator and that enables the operator to obtain the same operability as in a real space even in a virtual space. Solution to Problem

An operation display system of the present disclosure is an operation display system that virtually displays an operation unit to be operated on a virtual space, the operation display system including: an operation panel; a finger detection sensor that detects a position of a finger of an operator who operates the operation panel; a display unit that superimposes and displays the operation unit corresponding to a position of the operation panel and an image indicating the position of the finger on the virtual space, based on the detected position of the finger with respect to the operation panel; and a control unit that executes display control relating to display of the operation unit and the image indicating the position of the finger on the display unit, in which the operation panel has a base, and a bodily sensation imparting member that is disposed on the base and imparts a bodily sensation to the operator, and the control unit determines whether or not there is an operation of the operation unit, based on a detection result of the finger detection sensor.

### Advantageous Effects of Invention

According to the present disclosure, an operational feeling is imparted to an operator and the operator can obtain the same operability as in a real space even in a virtual space.

### Brief Description of Drawings

Fig. 1 is a block diagram showing an example of an operation display system according to Embodiment 1.
Fig. 2 is a schematic diagram schematically showing an example of an operation panel according to Embodiment 1.
Fig. 3 is an explanatory diagram of an operation device that is displayed on a display unit.
Fig. 4 is a flowchart related to an operation determination of an operation unit.
Fig. 5 is a schematic diagram schematically showing an example of the operation panel according to Embodiment 1.
Fig. 6 is a schematic diagram schematically showing an example of the operation panel according to Embodiment 1.
Fig. 7 is a block diagram showing an example of an operation display system according to Embodiment 2.

### Description of Embodiments

Hereinafter, an embodiment according to the present disclosure will be described in detail with reference to the drawings. Further, the present disclosure is not limited by this embodiment. In addition, components in the embodiments described below include those that can be easily replaced by those skilled in the art, or those that are substantially the same. Further, the components described below can be combined as appropriate. Furthermore, in a case where there are a plurality of embodiments, the embodiments can be combined.

### [Embodiment 1]

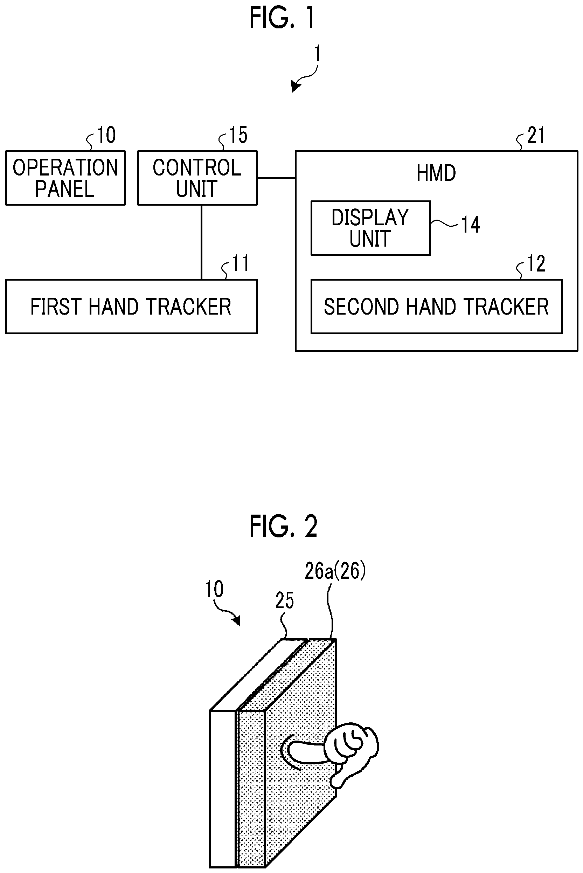

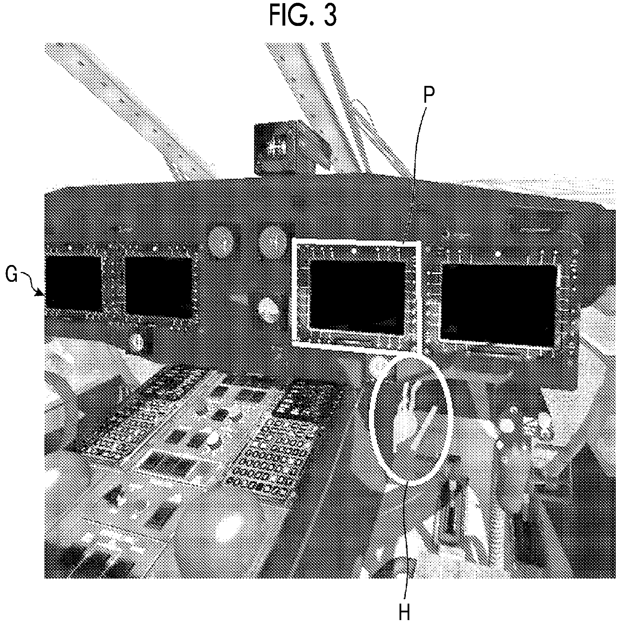

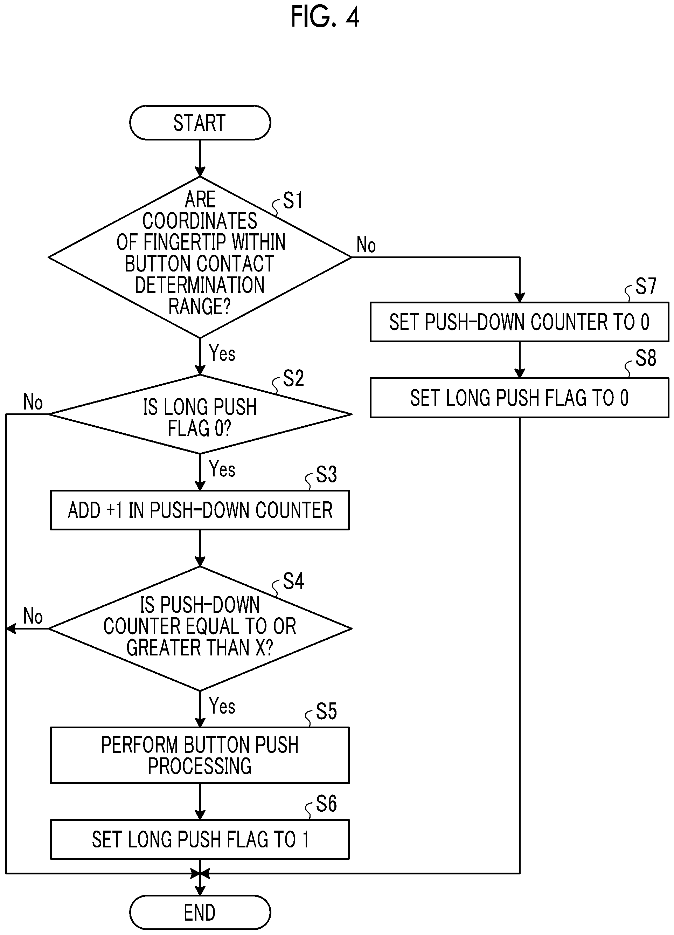

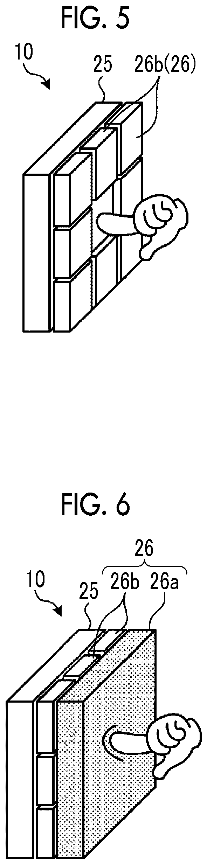

Fig. 1 is a block diagram showing an example of an operation display system according to Embodiment 1. Fig. 2 is a schematic diagram schematically showing an example of an operation panel according to Embodiment 1. Fig. 3 is an explanatory diagram of an operation device that is displayed on a display unit. Fig. 4 is a flowchart related to an operation determination of an operation unit. Fig. 5 is a schematic diagram schematically showing an example of the operation panel according to Embodiment 1. Fig. 6 is a schematic diagram schematically showing an example of the operation panel according to Embodiment 1.

### (Operation Display System)

An operation display system 1 of Embodiment 1 is a system that virtually displays an operation unit to be operated on a virtual space. The operation display system 1 is applied to, for example, a training system for performing various types of training, and an operation target is, for example, an operation device of an aircraft, a control operation device of a plant, an operation device of a vehicle, or the like. In Embodiment 1, the operation display system 1 will be described as being applied to the operation device of the aircraft. In addition, the operation unit targets, for example, a component for performing a push-down operation, and includes, for example, an operation button, a changeover switch, and the like.

The operation display system 1 includes an operation panel 10, first and second hand trackers (finger detection sensors) 11 and 12, a display unit 14, and a control unit 15. Since the display unit 14 and the second hand tracker 12 are integrally incorporated in a head mounted display (HMD) 21, the operation display system 1 has a configuration including the operation panel 10, the first hand tracker 11, the HMD 21, and the control unit 15.

The HMD 21 has the display unit 14 that is set on the head of the operator and that is disposed in front of the operator's eyes, and the second hand tracker 12 that detects the finger of the operator. The display unit 14 is, for example, a display as a display device. The display unit 14 displays an image generated in the control unit 15. The display unit 14 displays, as an image, for example, an image G of the cockpit of the aircraft as the virtual space shown in Fig. 3, and the image G includes an operation device P as the operation unit provided in the cockpit and a finger H of the pilot.

The second hand tracker 12 is provided integrally with the HMD 21 and detects the finger of the operator in a predetermined detection range. For this reason, the detection range of the second hand tracker 12 changes according to the movement of the head of the operator.

In addition, the position of the HMD 21 set to the home position is the initial position, and the initial position is the reference position of the three-dimensional coordinates in the virtual space. That is, the registration between the three-dimensional coordinates in the virtual space and the three-dimensional coordinates in the real space is performed based on the reference position.

The first hand tracker 11 is provided at an installation location where the operation panel 10 is installed, and detects the finger of the operator in a predetermined detection range. For this reason, the first hand tracker 11 has a fixed detection range and detects the finger of the operator around the operation panel 10.

The operation panel 10 is installed at a position in the real space corresponding to the operation device P in the virtual space. As shown in Fig. 2, the operation panel 10 includes a base 25 and a bodily sensation imparting member 26 disposed on the base 25. The base 25 is a plate-shaped member. The bodily sensation imparting member 26 is a member that imparts a bodily sensation to the operator, and is a member that imparts a bodily sensation related to the button operation of the operation device P. Specifically, the bodily sensation imparting member 26 is a foam 26a such as a sponge, and is elastically deformed by the operator performing the push-down operation, thereby imparting the bodily sensation of the push-down operation to the operator. The bodily sensation imparting member 26 is not particularly limited to the foam, and for example, a gel-like material, cloth, or the like may be applied, and any member may be used as long as the member imparts the bodily sensation to the operator. The disposition region where the operation panel 10 is disposed is a region larger than the operation region where the operation device P is operated. Specifically, the operation panel 10 has a size that allows a positional deviation between the operation device P in the virtual space and the operation panel 10 in the real space. For this reason, the operation panel 10 has a region larger than the surface of the operation device P, and the thickness of the operation panel 10 is larger than the operation amount (pushing down) of the operation button in the operation device P.

The control unit 15 includes, for example, an integrated circuit such as a central processing unit (CPU). The control unit 15 simulates the operation of the aircraft based on the input of the operation device P operated in the virtual space, performs display control of the HMD 21, or combines the positions of the finger detected by the first hand tracker 11 and the second hand tracker 12.

Specifically, the control unit 15 executes processing of simulating the operation of the aircraft, operates the aircraft in a simulated manner based on the input of the operation device P operated in the virtual space, and displays a result of the operation on the display unit 14 as the image G. In addition, the control unit 15 acquires the position-combined position (coordinates) of the finger by performing position combination using the position combination program based on the positions of the finger detected by the first hand tracker 11 and the second hand tracker 12. The control unit 15 generates an image of the finger based on the acquired position of the finger, superimposes the generated image of the finger on the image G, and displays the image G on the display unit 14.

Next, the processing related to the operation determination of the operation device P will be described with reference to Fig. 4. In Fig. 4, the processing is the operation determination processing in a case where a predetermined operation button in the operation device P is operated. The operation determination processing shown in Fig. 4 is repeatedly executed in the control unit 15.

The control unit 15 determines whether or not the acquired position (coordinates) of the fingertip is within a button contact determination range with which a predetermined operation button of the operation device P comes into contact, in the virtual space (step S1). When the control unit 15 determines in step S1 that the position of the fingertip is within the button contact determination range (step S1: Yes), the control unit 15 determines whether or not a long push flag, which is a flag that the button operation is being long pushed, is 0 (not long pushed) (step S2).

Subsequently, when the control unit 15 determines that the long push flag is 0 in step S2 (step S2: Yes), the control unit 15 adds +1 in the push-down counter of the push-down operation (step S3). After executing step S3, the control unit 15 determines whether or not the push-down counter is equal to or greater than a preset counter value X (step S4). When the control unit 15 determines in step S4 that the push-down counter is equal to or greater than the counter value X (step S4: Yes), the control unit 15 executes button push processing on the assumption that the operation button is pushed down by being present in the button contact determination range for a predetermined time (step S5). After executing step S5, the control unit 15 sets the long push flag to 1 (long pushed) (step S6), and then ends the operation determination processing.

In step S1, in a case where the control unit 15 determines that the position of the fingertip is not within the button contact determination range (step S1: No), the control unit 15 resets the push-down counter to 0 (step S7). In addition, after executing step S7, the control unit 15 resets the long push flag to 0 (step S8) and ends the operation determination processing.

When the control unit 15 determines that the long push flag is not 0 in step S2 (step S2: No), the control unit 15 assumes that the button operation is being long pushed, that is, the button operation is continuously performed, and ends the operation determination processing.

When the control unit 15 determines in step S4 that the push-down counter is not equal to or greater than the counter value X (step S4: No), the control unit 15 ends the operation determination processing on the assumption that the button operation is not continuously performed for a predetermined time.

Next, other examples of the operation panel 10 will be described with reference to Figs. 5 and 6. In the operation panel 10 shown in Fig. 5, a switch 26b is disposed as the bodily sensation imparting member 26 instead of the foam 26a of the operation panel 10 shown in Fig. 2. The switch 26b is a button that can be turned on/off (ON/OFF) by the push-down operation. A plurality of the switches 26b may be disposed to correspond to the operation buttons of the operation device P, or the plurality of the switches 26b may be disposed in a spread state.

In the operation panel 10 shown in Fig. 6, as the bodily sensation imparting member 26, in addition to the foam 26a of the operation panel 10 shown in Fig. 2, the switch 26b is disposed between the base 25 and the foam 26a. The switch 26b is the same as the switch 26b shown in Fig. 5.

### [Embodiment 2]

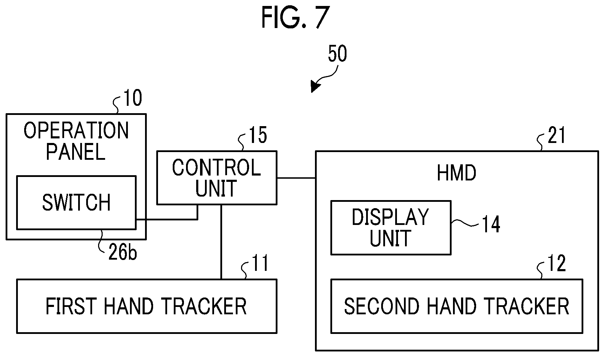

Next, Embodiment 2 will be described with reference to Fig. 7. Note that, in Embodiment 2, in order to avoid duplicate descriptions, portions that are different from those of Embodiment 1 will be described, and portions having the same configuration as those of Embodiment 1 will be described with the same reference numerals. Fig. 7 is a block diagram showing an example of an operation display system according to Embodiment 2.

In an operation display system 50 of Embodiment 2, the switch 26b is connected to the control unit 15 in the operation panel 10 including the switch 26b shown in Fig. 5 or Fig. 6. The control unit 15 is capable of acquiring whether or not the turn-on/off operation of the switch 26b is operable, and executes the operation determination processing based on whether or not the switch 26b is operable. That is, when the switch 26b is pushed down, the control unit 15 executes the button push processing. The control unit 15 may perform the operation determination processing of Embodiment 2 in parallel with the operation determination processing of Embodiment 1, or may omit the operation determination processing of Embodiment 1.

In addition, in Embodiment 2, the bodily sensation imparting member 26 of the operation panel 10 may further include a changeover mechanism that changes over whether or not the turn-on/off operation of the switch 26b is operable. The control unit 15 is connected to the changeover mechanism, and executes changeover control to disable the turn-on/off operation of the switch 26b or to enable the turn-on/off operation of the switch 26b by controlling the changeover mechanism.

The control unit 15 causes the switch 26b corresponding to the operation button to be operable and causes the switch 26b not corresponding to the operation button to be inoperable according to the type of the operation device P to be operated. Accordingly, the control unit 15 can make the operation panel 10 correspond to various operation devices P. A configuration in which the input operation of the switch 26b is disabled includes, for example, a configuration in which a physical push-down operation of the switch 26b is possible but an input signal by the push-down operation is not input to the control unit 15, and a configuration in which the switch 26b cannot be physically pushed down. With these configurations, it is possible to cause the operation panel 10 to correspond to an operation device having various operation ranges. Further, with the configuration in which the switch 26b cannot be physically pushed down, even when the pilot performs the push-down operation on the operation panel 10 at a position where the operation button in the virtual space is not present, the switch 26b is inoperable. Therefore, the bodily sensation of the push-down operation is not imparted to the pilot, and thus, a more accurate bodily sensation is imparted.

As described above, the operation display systems 1 and 50 described in Embodiments 1 and 2 are understood as follows, for example.

An operation display system 1, 50 according to a first aspect is an operation display system 1, 50 that virtually displays an operation unit (operation device P) to be operated on a virtual space, the operation display system 1, 50 including: an operation panel 10; a finger detection sensor 11, 12 that detects a position of a finger of an operator who operates the operation panel; a display unit 14 that superimposes and displays the operation unit corresponding to a position of the operation panel 10 and an image indicating the position of the finger on the virtual space, based on the detected position of the finger with respect to the operation panel 10; and a control unit 15 that executes display control relating to display of the operation unit and the image indicating the position of the finger on the display unit 14, in which the operation panel 10 has a base 25, and a bodily sensation imparting member 26 that is disposed on the base 25 and imparts a bodily sensation to the operator, and the control unit 15 determines whether or not there is an operation of the operation unit, based on a detection result of the finger detection sensor 11, 12.

With this configuration, the bodily sensation imparting member 26 can impart an operational feeling to the operator, and thus, the operator can obtain the same operability as in a real space even in a virtual space.

As a second aspect, in the operation display system 1, 50 according to the first aspect, the bodily sensation imparting member 26 includes at least one of a foam 26a that is elastically deformed in accordance with a push-down operation and a switch 26b that is turned on/off in accordance with the push-down operation.

With this configuration, the foam 26a and the switch 26b can impart the bodily sensation of the push-down operation to the operator.

As a third aspect, in the operation display system 1, 50 according to the first or second aspect, a disposition region in which the bodily sensation imparting member 26 is disposed is a region larger than an operation region in which the operation unit is operated.

With this configuration, the bodily sensation imparting member 26 can absorb the positional deviation between the operation unit in the virtual space and the operation panel in the real space.

As a fourth aspect, in the operation display system 1, 50 according to any one of the first to third aspects, the control unit 15 determines that there is the operation of the operation unit in a case where the finger of the operator is present in an operation unit contact determination range corresponding to the operation unit on the bodily sensation imparting member 26 for a predetermined time, from the detection result of the finger detection sensor 11, 12.

With this configuration, it is possible to suitably detect whether or not there is an operation by the operator.

As a fifth aspect, in the operation display system 1, 50 according to any one of the first to fourth aspects, the display unit 14 is included in a head mounted display 21, and the finger detection sensor 11, 12 includes a first finger detection sensor 11 provided at an installation location of the operation panel 10, and a second finger detection sensor 12 provided in the head mounted display 21.

With this configuration, the first finger detection sensor 11 and the second finger detection sensor 12 can widen the detection range of the finger of the operator, and thus the finger of the operator can be accurately detected.

As a sixth aspect, in the operation display system 50 according to any one of the first to fifth aspects, the bodily sensation imparting member 26 includes a switch 26b that is turned on/off in accordance with a push-down operation, and a changeover mechanism that changes over whether or not a turn-on/off operation of the switch 26b is operable, and the control unit 15 causes the turn-on/off operation of the switch 26b corresponding to an inoperable region of the operation unit to be inoperable via the changeover mechanism, and causes the turn-on/off operation of the switch 26b corresponding to an operable region of the operation unit to be operable via the changeover mechanism.

With this configuration, it is possible to cause the operation panel 10 to correspond to various operation units by changing over whether or not the turn-on/off operation of the switch 26b is operable according to the type of the operation unit to be operated.

### Reference Signs List

1: operation display system
10: operation panel
11: first hand tracker
12: second hand tracker
14: display unit
15: control unit
21: HMD
25: base
26: bodily sensation imparting member
26a: foam
26b: switch
50: operation display system

## Claims

1. An operation display system that virtually displays an operation unit to be operated on a virtual space, the operation display system comprising:
an operation panel;
a finger detection sensor that detects a position of a finger of an operator who operates the operation panel;
a display unit that superimposes and displays the operation unit corresponding to a position of the operation panel and an image indicating the position of the finger on the virtual space, based on the detected position of the finger with respect to the operation panel; and
a control unit that executes display control relating to display of the operation unit and the image indicating the position of the finger on the display unit,
wherein the operation panel has
a base, and
a bodily sensation imparting member that is disposed on the base and imparts a bodily sensation to the operator, and
the control unit determines whether or not there is an operation of the operation unit, based on a detection result of the finger detection sensor.

2. The operation display system according to Claim 1,
wherein the bodily sensation imparting member includes at least one of a foam that is elastically deformed in accordance with a push-down operation and a switch that is turned on/off in accordance with the push-down operation.

3. The operation display system according to Claim 1,
wherein a disposition region in which the bodily sensation imparting member is disposed is a region larger than an operation region in which the operation unit is operated.

4. The operation display system according to Claim 1,
wherein the control unit determines that there is the operation of the operation unit in a case where the finger of the operator is present in an operation unit contact determination range corresponding to the operation unit on the bodily sensation imparting member for a predetermined time, from the detection result of the finger detection sensor.

5. The operation display system according to Claim 1,
wherein the display unit is included in a head mounted display, and
the finger detection sensor includes
a first finger detection sensor provided at an installation location of the operation panel, and
a second finger detection sensor provided in the head mounted display.

6. The operation display system according to Claim 1,
wherein the bodily sensation imparting member includes
a switch that is turned on/off in accordance with a push-down operation, and
a changeover mechanism that changes over whether or not a turn-on/off operation of the switch is operable, and
the control unit causes the turn-on/off operation of the switch corresponding to an inoperable region of the operation unit to be inoperable via the changeover mechanism, and causes the turn-on/off operation of the switch corresponding to an operable region of the operation unit to be operable via the changeover mechanism.
